# EUROPÄISCHE PATENTSCHRIFT

(11) **EP 1 999 355 B1**
(45) Veröffentlichungstag und Bekanntmachung des Hinweises auf die Patenterteilung: **05.08.2009**
(21) Anmeldenummer: 07726346.5
(22) Anmeldetag: 12.02.2007
(51) Int. Cl.: F02D 41/00, F02D 41/30

(54) **VERFAHREN UND VORRICHTUNG ZUM BETREIBEN EINER BRENNKRAFTMASCHINE**
METHOD AND DEVICE FOR OPERATING AN INTERNAL COMBUSTION ENGINE
PROCEDE ET DISPOSITIF D'UTILISATION D'UN MOTEUR A COMBUSTION INTERNE

(30) Priorität: 17.03.2006 DE 102006012746
(43) Veröffentlichungstag der Anmeldung: 10.12.2008
(73) Patentinhaber: Robert Bosch GmbH, 70442 Stuttgart (DE)
(72) Erfinder: KARRELMEYER, Roland, 74321 Bietigheim-Bissingen (DE); FISCHER, Wolfgang, 70839 Gerlingen (DE); HAERING, Juergen, 70184 Stuttgart (DE)
(86) Internationale Anmeldenummer: PCT/EP2007/051324
(87) Internationale Veröffentlichungsnummer: WO 2007/107412

(56) Entgegenhaltungen:
- DE-A1- 10 233 612
- JP-A- 2004 218 500
- US-B1- 6 390 054

## Beschreibung

Die Erfindung geht aus von einem Verfahren und einer Vorrichtung zum Betreiben einer Brennkraftmaschine nach Gattung der unabhängigen Ansprüche.

### Stand der Technik

Grundsätzlich bekannt sind Brennkraftmaschinen, bei denen Benzin direkt in den Brennraum eingespritzt und, ähnlich einer Dieselbrennkraftmaschine, selbst entzündet wird. Von der selbstzündenden Betriebsart von Ottomotoren erwartet man sich weitere Einsparungen beim Kraftstoffverbrauch und ein nochmals günstigeres Emissionsverhalten als bei Brennkraftmaschinen mit Benzin-Direkteinspritzung und Fremdzündung durch eine Zündkerze.

Eine homogene Selbstzündung wird bei einem Otto-Motor dadurch erreicht, dass ein erheblicher Anteil des verbrannten Luft/Kraftstoff Gemisches nicht in den Auspuff ausgeschoben wird, sondern im Brennraum verbleibt (so genannte interne Abgasrückführung). Das verbrannte Luft/Kraftstoff Gemisch wird nachfolgend als Restgas (RG) bezeichnet. Bei einer internen Abgasrückführung wird durch eine variable Ansteuerung der Einlass-und Auslassventile im Gaswechsel-OT entweder Restgas im Brennraum zurückbehalten (negative Ventilüberschneidung) oder es wird Restgas aus dem Abgas- oder dem Einlasskanal zurückgesaugt (positive Ventilüberschneidung).

In dem darauf folgenden Ansaugtakt wird das Restgas mit Verbrennungsluft und Kraftstoff vermischt. Dadurch hat das im Brennraum zum Zeitpunkt des Schließens des oder der Einlassventile befindliche Gasgemisch, bestehend aus Verbrennungsluft und Restgas, eine gegenüber dem Normalbetrieb deutlich erhöhte Temperatur. Durch die an den Ansaugtakt anschließende Verdichtung des im Brennraum befindlichen Gasgemisches steigt dessen Temperatur so weit an, dass sich das im Brennraum befindliche Kraftstoff-LuftGemisch ohne Fremdzündung durch eine Zündkerze selbst entzündet. Ziel der homogenen selbstzündenden Betriebsweise ist es, dass die Selbstzündung des im Brennraum befindlichen Kraftstoff-Luft-Gemisches ungefähr mit Erreichen des Zünd-OT stattfindet.

Dabei hat das Restgas zwei wichtige Aufgaben. Erstens stellt das heiße Restgas Wärme bereit, die in Verbindung mit der Temperaturerhöhung im Verdichtungstakt eine Selbstzündung des Kraftstoff Luft-Gemisches ermöglicht.

Die zweite Aufgabe des Restgases besteht darin, die Kinetik der durch Selbstzündung ausgelösten Verbrennung zu verlangsamen, um dadurch erstens die mechanische Belastung der Brennkraftmaschine zu reduzieren, deren Geräuschbildung zu reduzieren und das Entstehen lokaler Temperaturspitzen zu verhindern. Dadurch wird im Ergebnis eine Verbesserung des Wirkungsgrads der Brennkraftmaschine erreicht und, wegen der reduzierten Maximaltemperaturen, wird ein sehr NOx-armer und teilweise sogar NOx-freier Betrieb der Brennkraftmaschine ermöglicht.

Solche Verfahren sind beispielsweise aus der DE 102 33 612 A1 bekannt.

Die zur Selbstzündung benötigte Restgasmasse nimmt bei niedrigen Lastpunkten/Lastanforderungen zu, da die Abgastemperatur aufgrund der geringeren verbrannten Kraftstoffmasse sinkt. Bei höheren Lastanforderungen wird weniger Restgasmasse benötigt, da die Abgase heißer sind. Die lastabhängige Temperatur der im Zylinder verbleibenden Restgasmasse führt im dynamischen Betrieb beim Wechsel von niedrigen zu höheren Lasten zu Verbrennungsaussetzern, während beim Wechsel von hohen zu niedrigen Lasten zu frühe Verbrennungen auftreten.

### Offenbarung der Erfindung

### Vorteile der Erfindung

Das erfindungsgemäße Verfahren mit den Merkmalen des unabhängigen Anspruchs hat demgegenüber den Vorteil, dass bei einem Lastwechsel von einer ersten auf eine zweite Lastanforderung zunächst die Restgasmenge gemäß der ersten Lastanforderung und die Kraftstoffmenge gemäß der zweiten Lastanforderung bereitgestellt werden und so Verbrennungsaussetzer vermieden werden. Weitere Vorteile sind, dass beispielsweise keine weiteren Korrekturkennfelder notwendig sind und sich somit das Verfahren sehr robust erweist.

Ferner ist in ebenso vorteilhafter Weise ein Steuergerät zum Betreiben einer Brennkraftmaschine vorgesehen, bei dem das Steuergerät in dem Arbeitszyklus, in dem ein Lastwechsel von einer ersten auf eine zweiten Lastanforderung vorgenommen wird, mindestens eine Betriebsgröße gemäß der zweiten Lastanforderung bereitstellt, und das Steuergerät ein Verzögerungsglied umfasst, das in dem Lastwechselarbeitszyklus, in dem der Lastwechsel erfolgt eine Restgasmenge gemäß der ersten Lastanforderung bereitstellt.

Durch die in den abhängigen Ansprüchen aufgeführten Maßnahmen sind vorteilhafte Weiterbildungen und Verbesserungen der im unabhängigen Anspruch angegebenen Vorrichtung bzw. Verfahrens möglich.

In einer weiteren vorteilhaften Ausgestaltung ist es vorgesehen, dass in den dem Lastwechselarbeitszyklus nachfolgenden Arbeitszyklen weitere Betriebsgrößen gemäß der zweiten Lastanforderung bereitgestellt werden.. Dies ermöglicht es, den Lastwechsel nicht sprungartig, sondern sukzessive über mindestens zwei Arbeitszyklen verteilt durchzuführen, um so die Ansteuergrößen beispielsweise im Hinblick auf eine geringe Schadstoffemission zu optimieren. Wobei es jedoch vorgesehen sein kann, dass in dem dem Lastwechsel unmittelbar folgenden Arbeitszyklus nach wie vor nur die Kraftstoffmenge gemäß der zweiten Betriebsart eingebracht wird.

Eine weitere vorteilhafte Ausführungsform sieht vor, das bei einer Brennkraftmaschine mit variabel ansteuerbaren Gaswechselventile, das mindestens eine Auslassventil bei einem Lastwechsel im Lastwechselarbeitszyklus (k) mit den Ansteuergrößen der ersten Lastanforderung angesteuert wird, so dass in vorteilhafter Weise eine Restgasmenge zur Verfugung steht mit der sich ein Verbrennungsaussetzer vermeiden lässt.

### Zeichnungen

Ausführungsbeispiele der Erfindung sind in den Zeichnungen dargestellt und in der nachfolgenden Beschreibung näher erläutert.

Es zeigen:
- Figur 1: schematisch den Aufbau einer Brennkraftmaschine
- Figur 2: ein Diagramm mit einem Brennraumdruck- und Ventilhubverlauf

### Beschreibung

Die Erfindung wird beispielhaft anhand einer Brennkraftmaschine dargestellt, bei der der Kraftstoff direkt einen Brennraum der Brennkraftmaschine eingespritzt wird. Prinzipiell wind jedoch auch andere Verfahren denkbar, mit denen Kraftstoff für die Verbrennung zur Verfügung gestellt wird. Insbesondere kommt auch ein Saugrokeinspritzung in Frage.

Ferner ist das Verfahren nicht nur auf Brennkraftmaschinen mit variablen Ventiltrieb - beispielsweise Nockenwellen-Phasenverstellung oder elektrohydraulische Ventiltrieb - beschränkt, sondern kann auch Anwendung finden bei einem Ventiltrieb mit fester Phase zur Nockenwelle, wobei dann die Abgasrückführung vorzugsweise extern erfolgt.

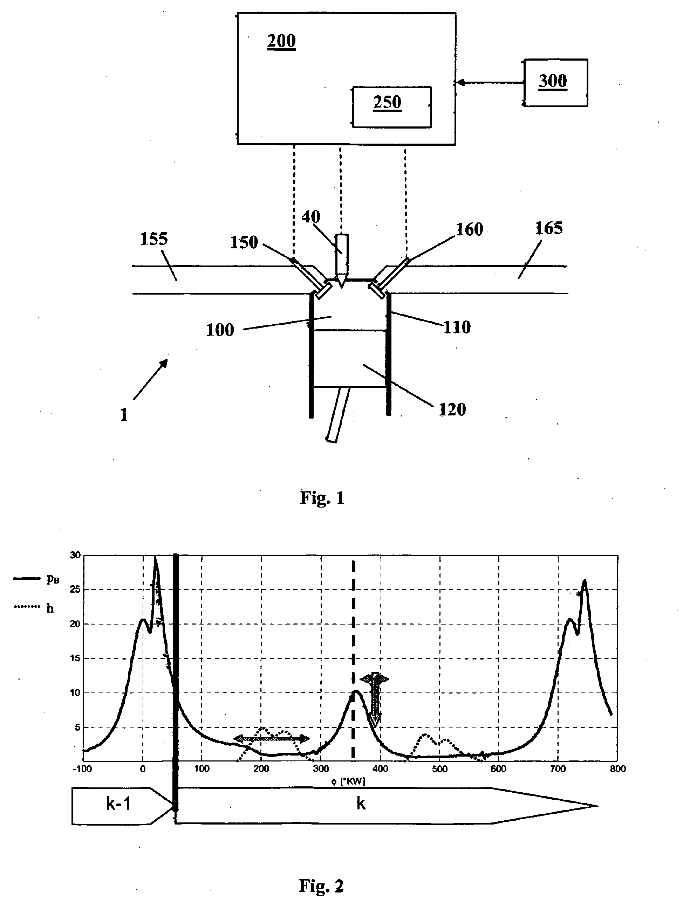

In Figur 1 ist schematisch eine Brennkraftmaschine 1 gezeigt, wobei beispielhaft ein Zylinder 110 mit einem Einspritzventil dargestellt sind. Im Zylinder 110 ist ein Kolben 120 bewegbar angeordnet. Der Zylinder weist einen Brennraum 100 auf, der unter anderem durch den Kolben 120, durch Gaswechselventile nämlich einem Einlassventil 150 und einem Auslassventil 160 begrenzt ist. Es können auch mehrere Ein- und/oder Auslassventile 150, 160 vorgesehen sein. Im Bereich der Ein- und Auslassventile 150, 160 ragt das Einspritzventil 40 in den Brennraum 100 hinein, und ermöglicht ein direktes Einbringen von Kraftstoff in den Brennraum 100. Weiterhin führt ein Saugrohr 155 vorzugsweise Luft an das Einlassventil 150 heran und durch Öffnen des Einlassventils 150 gelangt die Luft in den Brennraum 110. Durch Öffnen des Auslassventils 160 werden vorzugsweise Abgase in ein Abgasrohr 165 weiter geleitet. Alternativ kann bei einer Saugrohreinspritzung auch ein Einspritzventil am Saugrohr vorgesehen sein.

Das Einspritzventil 40 sowie das Ein- und Auslassventil 150, 160 sind über Steuerleitungen mit einem Steuergerät 200 verbunden. Über die Steuerleitungen werden die Komponenten der Brennkraftmaschine vom Steuergerät für eine vorliegende Betriebsart in geeigneter Weise angesteuert. Drehmomentenwechsel bzw. neue Lastanforderungen können beispielsweise vom Fahrer über die Fahrpedalstellung signalisiert werden oder auch betriebsbedingt beispielsweise aufgrund einer Zuschaltung weiterer Aggregate initiiert werden. Die Erfassung einer solchen Lastanforderung ist in Figur 1 als Erfassungsmittel 300 dargestellt. Ausgehend von einer Lastanforderung stellt das Steuergerät neue Ansteuerungsgrößen bzw. Betriebsgrößen zur Verfügung. Erfindungsgemäß ist im Steuergerät 200 ein Verzögerungsmittel 250 vorgesehen, das zumindest für einen Teil der neuen Ansteuerungsgrößen die Bereitstellung verzögert, so dass das Steuergerät die Komponenten der Brennkraftmaschine, und hier insbesondere das Einspritzventil 40 und die Gaswechselventile 150, 160; zu einem Teil mit neuen und zum anderen mit alten Größten ansteuert.

In Figur 2 ist beispielhaft ein Verlauf eines Brennraumdruck p_{B} (durchgezogene Linie) und die Ventilhübe h der Gaswechselventile (gestrichelte Linie) in einem homogenen Betrieb einer Brennkraftmaschine in kontrollierter Selbstzündung über dem Kurbelwellenwinkel gezeigt. Über der Ordinate ist ein Kurbelwellenwinkel von -100 bis 800° dargestellt und über der Abszisse ist der Brennraumdruck und der Ventilhub aufgetragen. Bei 0° und bei 720° befindet sich der Obere Totpunkt der Zündung ZOT und bei 360° der Obere Totpunkt im Ladungswechsel LOT. Der Ladungswechsel dient in bekannter Weise dem Ausstoßen verbrannter Abgase vorzugsweise bei einem Kurbelwellenwinkel zwischen 180° und 360°, und dem Ansaugen von Frischluft (oder ggf. einem Kraftstoff-LuftGemisch bei einer Saugrohreinspritzung) in einem Bereich von vorzugsweise 360° bis 540°. Hiernach schließt sich ein Verdichtungstakt einem Kurbelwellenwinkelbereich von 540° bis 720° in dem die Frischluft, der Kraftstoff und ein .ggf. vorhandenes Restgas verdichtet werden. Bei einem Ottomotor mit Direkteinspritzung wird der Kraftstoff je nach Betriebsart beispielsweise in der Ansaugphase und/oder auch in der Verdichtungsphase eingespritzt und in der Nähe des Zünd-OTs mit Hilfe einer Zündkerze entzündet.

Alternativ kann das Restgas auch mit Hilfe einer externen Abgasrückführung dem Brennraum zugeführt werden. Bei einer externen Abgasrückführung wird das Restgas typischerweise über eine Rückleitung von der Abgasseite dem Saugrohr kontrolliert zugeführt. Auch andere Rückführmöglichkeiten sind denkbar.

Bei einem Betrieb einer Brennkraftmaschine und hier insbesondere eines Ottomotors in kontrollierter Selbstzündung wird der Kraftstoff nicht mit Hilfe einer Zündkerze, sondern aufgrund der Temperaturentwicklung der im Brennraum komprimierten Gase entzündet. Im weiteren wird die Erfindung anhand einer solchen Brennkranmaschine erläutert, ohne jedoch die Anwendung auf eine solche Brennkraftmaschine zu beschränken. Insbesondere ist es denkbar, das erfindungsgemäße Vorgehen auch mit anderen Brennkraftmaschinen mit und ohne Zündeinrichtung durchzuführen, und insbesondere auch bei einer Diesel-Brennkraftmaschine und Brennkraftmaschinen mit Saugrohreinspritzung.

Zur Bereitstellung eines homogenen Luftkraftstoff-Gemischs wird, wie in Figur 2 gezeigt, der Kraftstoff in einem Bereich nach dem Gaswechsel-OT eingespritzt. Im dargestellten Beispiel bei ca. 380°. Nachfolgend wird das Einlassventil bei ca. 450° bis 580° geöffnet, so dass Frischluft in den Brennraum strömen kann. Durch die Bewegungen des Kolbens und der einströmenden Frischluft wird der eingespritzte Kraftstoff im Wesentlichen homogen im Brennraum verteilt. Während der Verdichtung des Luft-Kraftstoffgemischs wird die Temperatur des Gemisches so stark erhöht, dass das Gemisch sich selbständig entzündet.

Der Zeitpunkt bzw. der Kurbelwellenwinkel bei dem die selbständige Entzündung erfolgt, wird vornehmlich durch die angesaugte Frischluftmenge und die im Brennraum zurückgehaltene oder zurückgeführte Restgasmenge sowie auch Einspritzbeginn und -dauer eingestellt werden. Die Parameter zur Einstellung dieser Größen und ggf. weiteren Größen sind typischerweise in Kennfeldern oder auch Vorsteuerkennfeldern beispielsweise in Abhängigkeit einer Last- oder Drehmomentenanforderung abgelegt.

Die zur Selbstzündung benötigte Restgasmasse nimmt bei niedrigen Lastpunkten/Lastanforderungen zu, da die Abgastemperatur aufgrund der geringeren verbrannten Kraftstoffmasse sinkt. Bei höheren Lastanforderungen wird weniger Restgasmasse benötigt, da die Abgase heißer sind. Die lastabhängige Temperatur der im Zylinder verbleibenden Restgasmasse führt im dynamischen Betrieb beim Wechsel von niedrigen zu höheren Lasten zu Verbrennungsaussetzern, während beim Wechsel von hohen zu niedrigen Lasten zu frühe Verbrennungen auftreten.

Bisher bekannte Verfahren gehen von einer schrittweisen Anpassung der Restgasmasse im Lastsprung bzw. Lastwechsel aus. Dazu werden im Lastsprung alle Ansteuergrößen - Ventilzeiten, Einspritzmenge und Einspritztiming - schlagartig umgeschaltet. Aussetzen werden verhindert, indem die Auswirkungen des zu heißen bzw. zu kalten Restgas durch eine Anpassung des Einspritzzeitpunktes oder der Ventilzeiten entgegengewirkt wird. Die Parameter zur Vermeidung von Aussetzern bei einem Lastwechsel werden hierzu in Korrekturkennfeldern abgelegt.

Das hier beschriebene Verfahren verzichtet auf solche Korrekturkennfelder, die im Allgemeinen auch von der Höhe des Lastsprunges abhängen.

Erfindungsgemäß sind vorzugsweise Verzögerungsglieder vorgesehen, die ausgewählte Ansteuergrößen - beispielsweise Öffnungs- und Schließzeiten der Gaswechselventile oder Einspritzzeiten - mit einem Zyklus Verzögerung umschalten.

In Figur 2 sind ferner ein erster und zweiter Arbeitszyklus k-1, k dargestellt, wobei die Trennung der beide Arbeitszyklen bei ca. 60° Kurbelwellenwinkel willkürlich getroffen wurde, und selbstverständlich für ein jeweiliges Motorsteuergerät individuell festgelegt werden kann. Im vorliegenden Beispiel befindet sich die Brennkraftmaschine im ersten Arbeitszyklus k-1 in einem selbstzündenden Betrieb am Lastpunkt A bzw. es liegt eine Lastanforderung A vor. Im Arbeitszyklus k, in einem so genannten Lastwechselarbeitszyklus k, soll nun ein Sprung in den Lastpunkt B erfolgen, d.h. im Lastwechselarbeitszyklus k soll schon die Last (Leistung) B abgegeben werden. In Kennfeldern liegen die Ansteuergrößen vor, die zum stationären Betrieb im Lastpunk A und B benötigt werden.

Für den ersten Arbeitszyklus k-1 werden die Ansteuergrößen aus dem Kennfeld oder Vorsteuerkennfeld von Lastpunkt A verwendet. Für den nachfolgenden Lastwechselarbeitszyklus k werden die Ansteuergrößen weiterhin aus dem Kenn- oder Vorsteuerkennfeld bezüglich Lastpunkt A verwendet, die Kraftstoffmasse jedoch wird bereits bezüglich Lastpunkt B zur Verfügung gestellt.

Je nach Bedarf können jedoch im Lastwechselarbeitszyklus k auch weitere Parameter bzw. Ansteuergrößen bezüglich Lastpunkt B zur Verfügung gestellt werden. Insbesondere kann es vorgesehen sein, dass auch bereits der Einspritzzeitpunkt bezüglich des neuen Lastpunkt B verwendet wird. Erfindungsgemäß sollte jedoch mindestens die Restgasmenge im Lastwechselarbeitszyklus k noch gemäß des alten Lastpunkts A bereit gestellt werden, damit eine ausreichende Wärme- und Restgasmenge für die Selbstzündung in der Verdichtungsphase zur Verfügung steht und Verbrennungsaussetzer sicher vermieden werden können.

Die Restgasmenge wird bei einer internen vorzugsweise durch die gezielte Betätigung der Auslassventile bereitgestellt. Bei dem erfindungsgemäßen Lastwechsel werden zur Bereitstellung der Restgasmenge gemäß der alten Lastanforderung die Auslassventile entsprechend angesteuert, so dass bis auf unvermeidlichen Druck- und Temperaturvariationen im Brennraum für gleich bleibende Ansteuerung der Ventile im Wesentlichen immer die gleiche Restgasmenge zur Verfügung gestellt werden kann.

Bei einer externen Abgasrückführung wäre dementsprechend das Rückführventil entsprechend anzusteuern.

## Patentansprüche

1. Verfahren zum Betreiben einer Brennkraftmaschine, bei dem in Abhängigkeit einer Lastanforderung, eine Frischluft-, Restgas-, und Kraftstoffinenge bereitgestellt werden,
**dadurch gekennzeichnet, dass** bei einem Lastwechsel von einer ersten auf eine zweite Lastanforderung zunächst
- die Restgasmenge gemäß der ersten Lastanforderung und
- die Kraftstoffmenge gemäß der zweiten Lastanforderung bereitgestellt werden.

2. Verfahren nach Anspruch 1, bei dem in den dem Lastwechselarbeitszyklus (k) nachfolgenden Arbeitszyklen weitere Betriebsgrößen gemäß der zweiten Lastanforderung bereitgestellt werden.

3. Verfahren gemäß Anspruch 1 oder 2, bei dem Gaswechselventile der Brennkraftmaschine variabel angesteuert werden, wobei abhängig von einer Lastanforderung durch gezieltes Ansteuern des mindestens einen Auslassventils eine Restgasmenge in einem Brennraum zurückgehalten wird, und bei dem bei dem Lastwechsel im Lastwechselarbeitszyklus (k) die Ansteuerung des mindestens einen Auslassventils gemäß der ersten Lastanforderung erfolgt.

4. Steuergerät zum Betreiben einer Brennkraftmaschine gemäß eines der vorgenannten Verfahren, bei dem das Steuergerät in einem Lastwechselarbeitszyklus (k), in dem ein Lastwechsel von einer ersten auf eine zweiten Lastanforderung vorgenommen wird, mindestens eine Betriebsgröße gemäß der zweiten Lastanforderung bereitstellt, **dadurch gekennzeichnet, dass** das Steuergerät ein Verzögerungsglied umfasst, das in dem Lastwechselarbeitszyklus (k), in dem der Lastwechsel erfolgt eine Restgasmenge gemäß der ersten Lastanforderung bereitstellt.

## Claims

1. Method for operating an internal combustion engine, in which method a fresh air quantity, residual gas quantity and fuel quantity are provided as a function of a load demand, **characterized in that**, in the event of a load alteration from a first to a second load demand, firstly
- the residual gas quantity is provided according to the first load demand and
- the fuel quantity is provided according to the second load demand.

2. Method according to Claim 1, in which method, in the working cycles following the load alteration working cycle (k), further operating variables are provided according to the second load demand.

3. Method according to Claim 1 or 2, in which method gas-exchange valves of the internal combustion engine are variably actuated, with a residual gas quantity being retained in a combustion chamber as a function of a load demand by means of targeted actuation of the at least one outlet valve, and in which method, during the load alteration in the load alteration working cycle (k), the actuation of the at least one outlet valve takes place according to the first load demand.

4. Control unit for operating an internal combustion engine according to one of the preceding methods, in which the control unit, in a load alteration working cycle (k) in which a load alteration is carried out from a first load demand to a second load demand, provides at least one operating variable according to the second load demand, **characterized in that** the control unit comprises a delay element which, in the load alteration working cycle (k) in which the load alteration takes place, provides a residual gas quantity according to the first load demand.

## Revendications

1. Procédé pour faire fonctionner un moteur à combustion interne, dans lequel, en fonction d'une demande de charge, une quantité d'air frais, de gaz résiduel et de carburant est fournie, **caractérisé en ce que** dans le cas d'un changement de charge d'une première demande de charge à une deuxième demande de charge, tout d'abord
- la quantité de gaz résiduel conformément à la première demande de charge est fournie, et
- la quantité de carburant conformément à la deuxième demande de charge est fournie.

2. Procédé selon la revendication 1, dans lequel, dans les cycles de travail suivant le cycle de travail de changement de charge (k), d'autres valeurs de fonctionnement conformément à la deuxième demande de charge sont fournies.

3. Procédé selon la revendication 1 ou 2, dans lequel des soupapes d'échange gazeux du moteur à combustion interne sont commandées de manière variable, une quantité de gaz résiduel étant retenue dans une chambre de combustion en fonction d'une demande de charge par commande spécifique de l'au moins une soupape d'échappement, et dans lequel lors du changement de charge dans le cycle de travail de changement de charge (k), la commande de l'au moins une soupape d'échappement s'effectue selon la première demande de charge.

4. Appareil de commande pour faire fonctionner un moteur à combustion interne selon l'une quelconque des revendications précédentes, dans lequel l'appareil de commande, dans un cycle de travail de changement de charge (k), dans lequel un changement de charge est effectué d'une première demande de charge à une deuxième demande de charge, fournit au moins une valeur de fonctionnement conformément à la deuxième demande de charge, **caractérisé en ce que** l'appareil de commande comprend un organe de retard, qui fournit, dans le cycle de travail de changement de charge (k) dans lequel a lieu le changement de charge, une quantité de gaz résiduel conformément à la première demande de charge.
